# EUROPEAN PATENT SPECIFICATION

(11) **EP 0 387 883 B1**
(45) Date of publication and mention of the grant of the patent: **29.12.1993**
(21) Application number: 90104942.9
(22) Date of filing: 15.03.1990
(51) Int. Cl.: B29C 49/24, B65C 9/25

(54) **Label and method for in-mold molding using a label thereof**
Etikett und Verfahren zum Formen in einer Form unter Verwendung eines solchen Etiketts
Etiquette et procédé pour le moulage dans un moule utilisant de telles étiquettes

(30) Priority: 17.03.1989 JP 65282/89
(43) Date of publication of application: 19.09.1990
(73) Proprietor: Yoshino Kogyosho Co., Ltd., Tokyo 136 (JP)
(72) Inventor: Harumi, Kinoshita, c/o Yoshino Kogyosho Co.Ltd.,, Tokyo, (JP); Masunori, Shimada, c/o Yoshino Kogyosho Co.Ltd.,, Tokyo, (JP); Akikazu, Kosugi, c/o Yoshino Kogyosho Co.Ltd.,, Tokyo, (JP); Yasuyuki, Shimizu, c/o Yoshino Kogyosho Co.Ltd.,, Tokyo, (JP); Yoshio, Akiyama, c/o Yoshino Kogyosho Co.Ltd.,, Tokyo, (JP); Senichi, Okita,, Nagoya-shi, Aichi-ken, (JP)
(74) Representative: Klunker . Schmitt-Nilson . Hirsch

(56) References cited:
- EP-A- 0 208 261
- EP-A- 0 281 701
- DE-A- 2 746 124
- DE-A- 3 334 643
- US-A- 3 657 043
- US-A- 4 605 462

## Description

### Background of the invention

The present invention relates to a label to be attached to containers, a method for in-mold molding using such a label and a container being provided with such a label.

In most cases of shampoo and rinse containers, paper labels are utilized on these containers for decreasing the cost.

It is also known that a label can be formed by a plastic film, which is placed in a mold before the container is formed and then in-mold molding is conducted whereby a container is formed with a bonded label on the surface thereof.

Conventional labels for said shampoo and rinse containers, which are typically used and stored in a bathroom where there is frequently high temperature and humidity, have many disadvantages, for example, mildewing the label, peeling the label off by moisture absorption, providing soiled print, and providing unclear label indicia by impregnated inks, thereby causing such products to have an unsanitary feeling and deteriorating the product image.

Although in-mold labeling of a plastic film label which is formed during container molding overcomes difficulties with paper labels, there is still a problem during the in-mold molding in that when attempting to take out a single label from a label supply where many labels are stacked, double or triple labels are often taken out stuck to each other because of static electricity generated by friction so that it is difficult to take out the labels one by one.

Further during in-mold molding, labels may be deformed and consequently accelerate container deformation.

And even if container is not deformed, the label may partially rise to the surface of the container, also causing container deformation.

Furthermore, since the printed layer of a label bonded to the container is generally located on the exterior of the label, it is often damaged by friction or by contact with liquid filled in the container.

In EP-A-0 281 701 it is disclosed to provide a container with an in-mold label by means of a heat activated adhesive. The heat activated adhesive is provided on one surface of the backing of the label and the image is provided on the opposite surface thereof.

In US-A-4 323 411 it is disclosed that prefabricated parts, e.g. labels in the form of a laminated foil consisting of printing sandwiched between two layers of thermoplastic material, may be attached to the preform of a container which preform is then expanded into the final shape of the container.

From US-A-3 108 850 it is known that labels may be provided with small high points or ridges at the surface adjacent to the container, in order to improve the reliability of the bond label-container.

### Summary of the invention

The present invention provides a label for in-mold molding which avoids mildew under high temperature and humidity environments and without damaging the printed layer thereof, and provides a process for in-mold molding which facilitates taking out the label during in-mold molding and prevents deformation of the label and the container.

According to the present invention, a label for in-mold molding is provided, comprising:
- a non-oriented plastic base film, said plastic base film comprising a material selected from the group consisting of polypropylene, polyethylene, polyester and polyvinyl chloride,
- a membrane layer for bonding to be welded by the heat of a molded article at the time of the in-mold molding, said membrane layer for bonding comprising as a main component a material selected from the group consisting of heat weldable adhesive wax, copolymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer, and
- a printed layer formed on the surface of said non-oriented plastic base film facing said membrane layer.

Further, a method for in-mold molding is provided, comprising:
- providing a label having a non-oriented plastic base film , a membrane layer for bonding , and a printed layer formed on the surface of the non-oriented plastic base film facing said membrane layer , said plastic base film comprising a material selected from the group consisting of polypropylene, polyethylene, polyester and polyvinyl chloride, and said membrane layer for bonding comprising as a main component a material selected from the group consisting of heat weldable adhesive wax, co-polymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer,
- inserting said label into a mold for in-mold molding and placing it in a proper position in said mold,
- molding a molded article in said mold, and
- bonding said label to the molded article by welding said membrane layer for bonding by the heat of the molded article at the time of the molding.

By this method a molded article is formed comprising a label having a non-oriented plastic base film, a membrane layer for bonding, and a printed layer,
said plastic base film comprising a material selected from the group consisting of polypropylene, polyethylene, polyester and polyvinylchloride, and said membrane layer for bonding comprising as a main component a material selected from the group consisting of heat weldable adhesive wax, copolymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer, said label being weldingly secured to said molded article by means of said membrane layer for bonding and said printed layer being superposed by said non-oriented plastic base film.

As a non-oriented plastic base film, for example, transparent or translucent polypropylene, polyethylene, polyester or polyvinyl chloride are used individually or as part of a laminate. These material may be used in compatibility with the material of the moldable article like container, and so that their properties are compatible as the case may be.

The printed layer can cover the whole surface of the base film or only part of it.

And, when polypropylene and other high transparency plastic film is used for the plastic base film, the printed layer can be seen through from the outside, and it gives a glossy surface since the printed layer is not exposed on the surface of the base film. When translucent material is used for the plastic base film, the printed layer can be seen from the outside as a frosted image, i.e. giving a different appearance from that when transparent material is used.

For the material of the moldable article, polypropylene, polyethylene, polyvinyl chloride, polyester, polystyrene, AS resin or polyacrylonitrile are used.

As a membrane layer for bonding to be welded by the heat of the molded article at the time of the in-mold molding, for example. low melting point polypropylene film, polyethylene film, PVC film, PET film, a membrane having as a main component heat weldable adhesive wax, a membrane having as a main component co-polymer of ethylene vinyl acetete, or any membrane having as a main component polyvinyl acetal polymer, polyvinyl alcohol polymer, polyacryl acid esteric polymer, vinyl chloride polymer, polyethylene polymer, polyurethane polymer or polyester polymer.

And, if different materials are used for the moldable article and said plastic based film with inferior bonding compatibility to each other, a good labeling effect to the molded article can be achieved by using a membrane layer for bonding which has good bonding properties to both of the materials.

A number of emboss areas are provided on said membrane layer of the in-mold molding label, so that labels can be taken out one by one from a label supply in which labels are stored by stacking for in-mold molding. This is possible by decreasing the generation of static electricity by decreasing the label contacting area, and by facilitating release of one label from another by the existence of air in each space between the labels, by the provision of emboss areas on the surface of the membrane layer.

According to the present invention, the in-mold molding method employs the aforementioned label, and thus the method has a number of advantages compared with conventional in-mold molding methods.

More particularly, according to the present invention, when said label is inserted into a mold for the in-mold molding, the label is held on the proper position in the mold by vacuum suction, or by static electricity, and the moldable article, e.g. a container, is molded by injecting, filling the plastics into a mold or by expanding a parison placed in a mold, whereby a membrane layer for bonding of the label contacts a surface of the molded article, and said membrane layer for bonding is bonded to the molded article by welding by the heat which the molded article has.

In this connection, if emboss areas are provided on the surface of the membrane layer for bonding, any air existing in the space between the container surface and the label is discharged to the exterior through the concave-convex shape of the emboss areas.

Further, since the plastic base film of the label is formed of non-oriented plastic film, it does not shrink, as oriented film does, by the heat driven by the in-mold molding, and subsequently it does not cause any deformation of the molded article accompanied with such shrinkage.

And, when labeling is made to the molded article, the printed layer is positioned in the rear side of the plastic base film and is protected by the plastic base film, and thus the printed layer is not damaged by friction, and in cases where the molded article is a container, it is also not damaged by liquid contained therein.

### BRIEF DESCRIPTION OF THE DRAWINGS

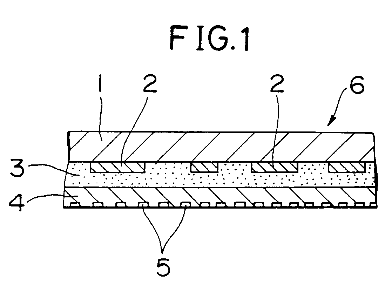

Fig. 1 is an enlarged cross sectional view showing a part of a label of an embodiment according to the present invention, and,
Fig. 2 are views showing steps of a process of molding in accordance with the invention.

### DETAILED DESCRIPTION OF THE PREFERRED EMBODIMENT

An embodiment of the in-molded molding label 6 according to the invention comprises a printed layer 2 formed on the rear surface of a plastic base film made of transparent non-oriented polypropylene having a thickness of 110µ , a membrane layer for bonding 4 laminated on said printed layer 2, through an adhesive 3 made of synthetic resin, the membrane layer for bonding 4 adapted to be welded by the heat of the molded article at the time of the in-mold molding, the membrane layer being made of low melting point polypropylene film having a thickness of 30µ . And, on the surface of said membrane layer for bonding 4, emboss areas 5 are provided.

In the aforementioned embodiment, the polypropylene film of the plastic base film 1 may have a thickness of about 75µ ∼ 130µ , and the low melting point polypropylene film of the membrane layer for bonding 4 may have a thickness of about 15µ ∼ 45µ .

If, in the above embodiment, the material of said membrane layer for bonding 4 is capable of being bonded to the rear surface of the plastic base film 1 wherein the printed layer 2 is formed, the membrane layer for bonding 4 can be attached to the plastic based film 1 without using adhesive 3.

Now the in-molded molding method according to the invention is described.

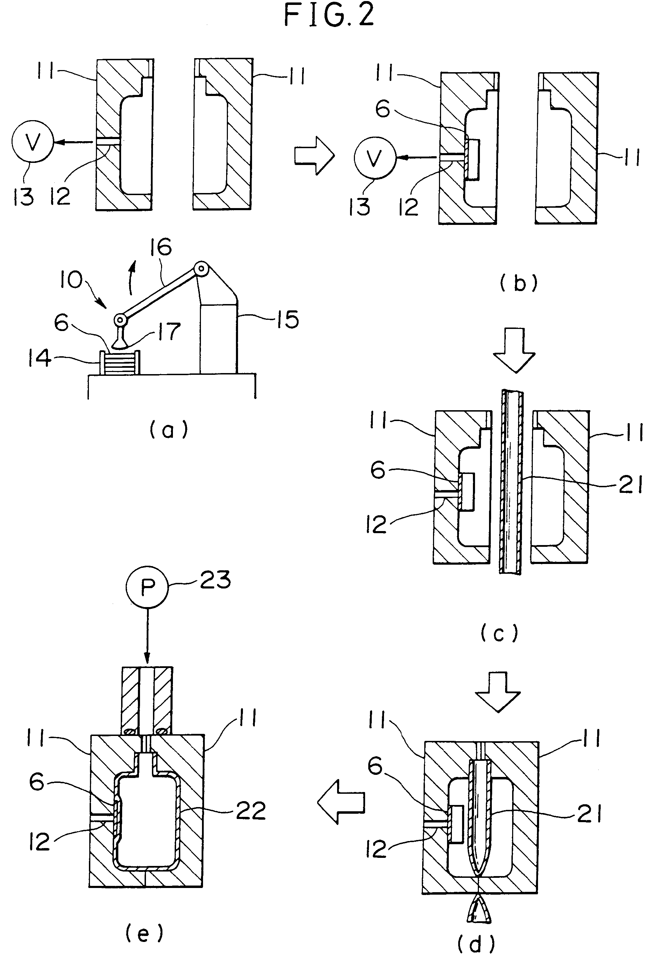

First, the molding equipment, as shown in Fig. 2 (a), consists of label supply unit 10 and container blow molding mold halves 11, 11, one of which has a suction orifice 12 which opens to a cavity, and said orifice 12 is connected with a vacuum suction unit 13, whereby a label 6 supplied from said label supply unit 10 is held in the mold (Fig. 2 (b)) by sucking a label 6 to the position of the suction orifice 12 by means of vacuum pressure by vacuum suction unit 13.

The label supply unit 10 has a label storing portion 14 and a label supply member 15. In said label storing portion 14, a number of labels 6 are stored by stacking. The label supply member 15 has a cupule 17 on the top end of a movable arm 16 enabling a label 6 to be supplied to the position of the suction orifice 12 in a mold 11 by moving the arm 16 and sucking by said cupule 17 a top positioned label 6 from the stored labels in the label storing portion 14. Of course, setting the label 6 into the mold 11 by taking out from the label storing portion 14 can be done by manual operation by an operator.

After setting a label 6 into the mold 11, a parison 21 or tubular shaped preform is placed in the mold 11, and the mold halves are clamped (Fig. 2 (c), (d)), and then a container 22 is blow-molded by expanding with air from a compression air source 23. By expanding the parison 21 or preform, the membrane layer for bonding 4 of label 6 contacts the surface of the container 22, so that said membrane layer for bonding 4 is bonded on the surface of the container 22 by welding by the heat of the container 22 from the blow-molding step (Fig. 2 (e)).

According to the present invention, since a non-oriented plastic base film 1 is used for the label 6, even though the label 6 is heated up by the in-mold molding, it does not deform the container 22 by shrinking the label 6, and label 6 itself has non phenomenon such as rising up to the surface of the container. Thus the desired shape of the container can be obtained.

Further, as emboss areas 5 are provided on the surface of the membrane layer for bonding 4, when the labels 6 are staked for the in-mold operation, contacting areas of each of the labels 6 are decreased, static electricity generated by friction is also decreased, and labels 6 are not stuck together due to the existence of air in each space between the labels 6, whereby a label 6 can be taken out easily one by one, thus increasing the operation efficiency.

Further, any air between the moldable container 22 and the label 6 during the in-mold molding is easily discharged through the emboss areas 5, and almost no air remains between the label 6 and the container 22. Thus the entire surface of the label 6 is hermetically completely bonded to the container 22. This phenomenon is even more remarkably effective with larger label sizes.

Such obtained container 22 is protected by the plastic base film 1 which protects the printed layer 2 located at a rear side of the label 6 from being damaged by friction or liquid within the container 22, and the surface of the plastic base film 1 is kept glossy because the printed layer 2 is not exposed on the surface.

## Claims

1. A label (6) for in-mold molding comprising:
- a non-oriented plastic base film (1), said plastic base film (1) comprising a material selected from the group consisting of polypropylene, polyethylene, polyester and polyvinyl chloride,
- a membrane layer for bonding (4) to be welded by the heat of a molded article (22) at the time of the in-mold molding, said membrane layer for bonding (4) comprising as a main component a material selected from the group consisting of heat weldable adhesive wax, copolymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer, and
- a printed layer (2) formed on the surface of said non-oriented plastic base film (1) facing said membrane layer (4).

2. A label (6) for in-mold molding as set forth in claim 1, wherein particular sizes of emboss areas (5) are provided on the surface of said membrane layer for bonding (4).

3. A label (6) for in-mold molding as set forth in claim 1 or 2, wherein the thickness of said plastic base film (1) is 75µ ~ 130µ and the thickness of said membrane layer for bonding (4) is 15µ ~ 45µ.

4. A label (6) for in-mold molding as set forth in any of the claims 1 to 3, wherein said membrane layer for bonding (4) is a weldable plastic film.

5. A label (6) for in-mold molding as set forth in any of the claims 1 to 4, wherein said membrane layer for bonding (4) is adhered by adhesive (3) on said surface of said plastic base film (1) on which said printed layer (2) is formed.

6. A label (6) for in-mold molding as set forth in any of the claims 1 to 5, wherein said membrane layer for bonding (4) is selected from the group consisting of low melting point polypropylene film, polyethylene film, PVC film, and PET film.

7. A method for in-mold molding comprising
- providing a label (6) having a non-oriented plastic base film (1), a membrane layer for bonding (4), and a printed layer (2) formed on the surface of the non-oriented plastic base film (1) facing said membrane layer (4), said plastic base film (1) comprising a material selected from the group consisting of polypropylene, polyethylene, polyester and polyvinyl chloride, and said membrane layer for bonding (4) comprising as a main component a material selected from the group consisting of heat weldable adhesive wax, co-polymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer,
- inserting said label (6) into a mold (11) for in-mold molding and placing it in a proper position in said mold (11),
- molding a molded article (22) in said mold (11), and
- bonding said label (6) to the molded article (22) by welding said membrane layer for bonding (4) by the heat of the molded article (22) at the time of the molding.

8. A method for in-mold molding as set forth in claim 7, wherein emboss areas (5) are provided on the surface of said membrane layer for bonding (4).

9. A method for in-molding as set forth in claim 7 or 8, wherein said membrane layer for bonding (4) is a weldable plastic film.

10. A method for in-mold molding as set forth in any of the claims 7 to 9, wherein said membrane layer for bonding (4) is adhered by adhesive (3) on said surface of said plastic base film (1) on which said printed layer (2) is formed.

11. A method for in-mold molding as set forth in any of the claims 7 to 10, wherein said membrane layer for bonding (4) is selected from the group consisting of low melting point polypropylene film, polyethylene film, PVC film, and PET film.

12. A molded article (22) comprising a label (6) having a non-oriented plastic base film (1), a membrane layer for bonding (4), and a printed layer (2), said plastic base film (1) comprising a material selected from the group consisting of polypropylene, polyethylene, polyester and polyvinylchloride, and said membrane layer for bonding (4) comprising as a main component a material selected from the group consisting of heat weldable adhesive wax, copolymer of ethylene vinyl acetate, polyvinyl acetal polymer, polyvinyl alcohol polymer, polyacryl acid esteric polymer, vinyl chloride polymer, polyethylene polymer, polyurethane polymer and polyester polymer, said label (6) being weldingly secured to said molded article (22) by means of said membrane layer for bonding (4) and said printed layer (2) being superposed by said non-oriented plastic base film (1).

## Patentansprüche

1. Etikett (6) zum Formen in einer Form aufweisend:
- einen nicht-ausgerichteten Kunststoff-Basisfilm (1), der ein Material aufweist, das ausgewählt ist aus der Gruppe, die besteht aus Polypropylen, Polyethylen, Polyester und Polyvinylchlorid,
- eine Membranschicht zum Anhaften (4), die zu verschweißen ist durch die Wärme eines geformten Gegenstands (22) zur Zeit des Formens in einer Form, wobei die Membranschicht zum Anhaften (4) als einen Hauptbestandteil ein Material aufweist, das ausgewählt ist aus der Gruppe, die besteht aus heißschweißbarem Adhäsionswachs, Copolymer von Ehylenvinylacetat, Polyvinylacetal-Polymer, Polyvinylalkohol-Polymer, Polyacrylsäureester-Polymer, Vinylchlorid-Polymer, Polyethylen-Polymer, Polyurethan-Polymer und Polyester-Polymer, und
- eine gedruckte Schicht (2), die ausgebildet ist auf der Oberfläche des nicht-ausgerichteten Kunststoff-Basisfilms (1), der zu der Membranschicht (4) weist.

2. Etikett (6) zum Formen in einer Form nach Anspruch 1, bei dem bestimmte Formate erhabener Bereiche (5) auf der Oberfläche der Membranschicht zum Anhaften (4) vorgesehen sind.

3. Etikett (6) zum Formen in einer Form nach Anspruch 1 oder 2, bei dem die Dicke des Kunststoff-Basisfilms (1) 75µ - 130 µ und die Dicke der Membranschicht zum Anhaften (4) 15µ - 45µ ist.

4. Etikett (6) zum Formen in einer Form nach einem der Ansprüche 1 bis 3, bei dem die Membranschicht zum Anhaften (4) ein schweißbarer Kunststoff-Film ist.

5. Etikett (6) zum Formen in einer Form nach einem der Ansprüche 1 bis 4, bei dem die Membranschicht zum Anhaften (4) durch einen Klebstoff (3) an der Oberfläche des Kunststoff-Basisfilms (1), auf dem die gedruckte Schicht (2) ausgebildet ist, angeklebt ist.

6. Etikett (6) zum Formen in einer Form nach einem der Ansprüche 1 bis 5, bei dem die Membranschicht zum Anhaften (4) ausgewählt ist aus der Gruppe, die besteht aus niedrig schmelzendem Polypropylen-Film, Polyethylen-Film, PVC-Film und PET-Film.

7. Verfahren zum Formen in einer Form aufweisend
- Bereitstellen eines Etiketts (6) mit einem nicht-ausgerichteten Kunststoff-Basisfilm (1), einer Membranschicht zum Anhaften (4) und einer auf der Oberfläche des nicht-ausgerichteten Kunststoff-Basisfilms (1), die zu der Membranschicht (4) weist, ausgebildeten gedruckten Schicht (2), wobei der Kunststoff-Basisfilm (1) ein Material aufweist, das ausgewählt ist aus der Gruppe, die besteht aus Polypropylen, Polyethylen, Polyester und Polyvinylchlorid, und wobei die Membranschicht zum Anhaften (4) als einen Hauptbestandteil ein Material aufweist, das ausgewählt ist aus der Gruppe, die besteht aus heiß schweißbarem Adhäsionswachs, Copolymer von Ethylenvinylacetat, Polyvinylacetal-Polymer, Polyvinylalkohol-Polymer, Polyacrylsäureester-Polymer, Vinylchlorid-Polymer, Polyethylen-Polymer, Polyurethan-Polymer und Polyester-Polymer,
- Einsetzen des Etiketts (6) in eine Form (11) zum Formen in einer Form und Anordnen in einer geeigneten Position in der Form (11),
- Formen eines geformten Gegenstands (22) in der Form (11), und
- Anhaften des Etiketts (6) an dem geformten Gegenstand (22) durch Schweißen der Membranschicht zum Anhaften (4) durch die Wärme des geformten Gegenstands (22) zur Zeit des Formens.

8. Verfahren zum Formen in einer Form nach Anspruch 7, bei dem erhabene Bereiche (5) auf der Oberfläche der Membranschicht zum Anhaften (4) vorgesehen sind.

9. Verfahren zum Formen in einer Form nach Anspruch 7 oder 8, bei dem die Membranschicht zum Anhaften (4) ein schweißbarer Kunststoff-Film ist.

10. Verfahren zum Formen in einer Form nach einem der Ansprüche 7 bis 9, bei dem die Membranschicht zum Anhaften (4) durch einen Klebstoff (3) an die Oberfläche des Kunststoff-Basisfilms (1), auf der die gedruckte Schicht (2) ausgebildet ist, angeklebt ist.

11. Verfahren zum Formen in einer Form nach einem der Ansprüche 7 bis 10, bei dem die Membranschicht zum Anhaften (4) ausgewählt ist aus der Gruppe, die besteht aus niedrig schmelzendem Polypropylen-Film, Polyethylen-Film, PVC-Film und PET-Film.

12. Geformter Gegenstand (22) aufweisend ein Etikett (6) mit einem nicht-ausgerichteten Kunststoff-Basisfilm (1), einer Membranschicht zum Anhaften (4) und einer gedruckten Schicht (2), wobei der Kunststoff-Basisfilm (1) ein Material aufweist, das ausgewählt ist aus der Gruppe, die besteht aus Polypropylen, Polyethylen, Polyester und Polyvinylchlorid, und wobei die Membranschicht zum Anhaften (4) als einen Hauptbestandteil ein Material aufweist, das ausgewählt ist aus der Gruppe, die besteht aus heiß schweißbarem Adhäsionswachs, Copolymer von Ethylenvinylacetat, Polyvinylacetal-Polymer, Polyvinylalkohol-Polymer, PolyacrylsäureesterPolymer, Vinylchlorid-Polymer, Polyethylen-Polymer, PolyurethanPolymer und Polyester-Polymer, wobei das Etikett (6) mittels der Membranschicht zum Anhaften (4) durch Schweißen an dem geformten Gegenstand (22) befestigt ist und die gedruckte Schicht (2) von dem nicht-ausgerichteten Kunststoff-Basisfilm (1) überlagert ist.

## Revendications

1. Etiquette (6) pour le moulage en moule, comprenant:
- une pellicule de base (1) en matière plastique non réticulée, ladite pellicule de base (1) en matière plastique contenant une matière sélectionnée dans un groupe composé de polypropylène, de polyéthylène, de polyester et de chlorure de polyvinyle,
- une couche membrane à souder (4), destinée à être soudée par la chaleur de l'article à mouler (22) au moment du moulage en moule, ladite couche membrane à souder (4) comprenant, comme composant principal, une matière sélectionnée dans un groupe composé de cire adhésive thermosoudable, de copolymère d'acétate vinylique d'éthylène, de polymère acétalique de polyvinyle, de polymère d'alcool de polyvinyle, de polymère d'ester d'acide polyacrylique, de polymère de chlorure de vinyle, de polymère de polyéthylène, de polymère de polyuréthanne, et de polymére de polyester, et
- une couche imprimée (2) constituée à la surface de ladite pellicule de base (1) en matière plastique non réticulée, qui fait face à ladite couche membrane (4).

2. Etiquette (6) pour le moulage en moule selon la revendication 1, dans laquelle des zones de bossages (5) de tailles particulières sont disposées à la surface de ladite couche membrane à souder (4).

3. Etiquette (6) pour le moulage en moule selon l'une des revendications 1 ou 2, dans laquelle l'épaisseur de ladite pellicule de base (1) en matière plastique est de l'ordre de 75 µ ∼ 130 µ, et l'épaisseur de ladite couche membrane à souder (4) est de l'ordre de 15 µ ∼ 45 µ.

4. Etiquette (6) pour le moulage en moule selon l'une quelconque des revendications 1 à 3, dans laquelle ladite couche membrane à souder (4) est une pellicule en matière plastique soudable.

5. Etiquette (6) pour le moulage en moule selon l'une quelconque des revendications 1 à 4, dans laquelle ladite couche membrane à souder (4) est collée au moyen d'une colle (3) sur ladite surface de ladite pellicule de base (1) en matière plastique, à laquelle est formée ladite couche imprimée (2).

6. Etiquette (6) pour le moulage en moule selon l'une quelconque des revendications 1 à 5, dans laquelle ladite couche membrane à souder (4) est sélectionnée dans un groupe comprenant de la pellicule polypropylène à bas point de fusion, de la pellicule polyéthylène, de la pellicule PVC et de la pellicule PET.

7. Procédé de moulage en moule, comprenant
- la disposition d'une étiquette (6) comprenant une pellicule de base (1) en matière plastique non réticulée, une couche membrane à souder (4), et une couche imprimée (2) formée à la surface de ladite pellicule de base (1) en matière plastique non réticulée, qui fait face à ladite couche membrane (4), ladite pellicule de base (1) en matière plastique non réticulée comprenant une matière sélectionnée dans un groupe composé de polypropylène, de polyéthylène, de polyester et de chlorure de polyvinyle, et ladite couche membrane à souder (4) comprenant, comme composant principal, une matière sélectionnée dans un groupe composé de cire adhésive thermosoudable, de copolymère d'acétate vinylique d'éthylène, de polymère acétalique de polyvinyle, de polymère d'alcool de polyvinyle, de polymère d'ester d'acide polyacrylique, de polymère de chlorure de vinyle, de polymère de polyéthylène, de polymère de polyuréthanne, et de polymère de polyester,
- l'insertion de ladite étiquette (6) dans un moule (11) de moulage en moule et le placement de celle-ci dans une position appropriée à l'intérieur du dit moule (11),
- le moulage d'un article moulé (22) dans ledit moule (11), et
- la soudure de ladite étiquette (6) sur l'article moulé (22) en soudant ladite couche membrane à souder (4) grâce à la chaleur de l'article moulé (22), au moment du moulage.

8. Procédé de moulage en moule selon la revendication 7, dans lequel des zones de bossages (5) sont disposées à la surface de ladite couche membrane à souder (4).

9. Procédé de moulage en moule selon l'une des revendications 7 ou 8, dans lequel ladite couche membrane à souder (4) est une pellicule en matière plastique soudable.

10. Procédé de moulage en moule selon l'une quelconque des revendications 7 à 9, dans lequel ladite couche membrane à souder (4) est collée, au moyen d'une colle (3), sur la surface de ladite pellicule de base (1) en matière plastique, sur laquelle est formée ladite couche imprimée (2).

11. Procédé de moulage en moule selon l'une quelconque des revendications 7 à 10, dans lequel ladite couche membrane à souder (4) est sélectionnée dans un groupe comprenant de la pellicule polypropylène à bas point de fusion, de la pellicule polyéthylène, de la pellicule PVC et de la pellicule PET.

12. Article moulé (22) comprenant une étiquette (6) ayant une pellicule de base (1) en matière plastique non réticulée, une couche membrane à souder (4), et une couche imprimée (2),
ladite pellicule de base (1) en matière plastique comprenant une matière sélectionnée dans un groupe constitué de polypropylène, de polyéthylène, de polyester et de chlorure de polyvinyle, et ladite couche membrane à souder (4) comprenant, comme composant principal, une matière sélectionnée dans un groupe composé de cire adhésive thermosoudable, de copolymère d'acétate vinylique d'éthylène, de polymère acétalique de polyvinyle, de polymère d'alcool de polyvinyle, de polymère d'ester d'acide polyacrylique, de polymère de chlorure de vinyle, de polymère de polyéthylène, de polymère de polyuréthanne, et de polymère de polyester,
ladite étiquette (6) étant fixée par soudure sur ledit article moulé (22), par l'intermédiaire de ladite couche membrane à souder (4), et ladite couche imprimée (2) étant recouverte par ladite pellicule de base (1) en matière plastique non réticulée.
